# EUROPEAN PATENT APPLICATION

(11) **EP 3 706 035 A1**
(43) Date of publication of application: **09.09.2020**
(21) Application number: 19161359.5
(22) Date of filing: 07.03.2019
(51) Int. Cl.: G06K 9/00, G06T 7/20

(54) **DEVICE, SYSTEM AND METHOD FOR TRACKING AND/OR DE-IDENTIFICATION OF FACES IN VIDEO DATA**

(71) Applicant: Koninklijke Philips N.V., 5656 AG Eindhoven (NL)
(72) Inventor: WANG, Haibo, 5656 AE Eindhoven (NL); KATIPALLY, Karthik, 5656 AE Eindhoven (NL); VAN ZON, Cornelis Conradus Adrianus Maria, 5656 AE Eindhoven (NL)
(74) Representative: de Haan, Poul Erik

(57) **Abstract**

The present invention relates to a device, system and method for tracking and/or de-identification of faces in video data. To enable a reliable tracking and/or de-identification the device (3) comprises processing circuitry (4) configured to detect one or more faces in a current image frame of video data of a scene, detect one or more body parts in said current image frame, track one or more faces detected in one or more earlier image frames of the video data in the current image frame by use of one or more face trackers, check the overlap between faces and body parts detected in the current image frame and merge overlapping faces and body parts into merged face-body objects, check the overlap between merged face-body objects and tracked faces to distinguish in the current image frame existing faces that have been tracked before and new faces that have not been tracked before, and update face trackers used in the detection of the one or more faces based on the position of existing faces and creating new face trackers based on the position of new faces

## Description

### FIELD OF THE INVENTION

The present invention relates to a device, system and method for tracking and/or de-identification of faces in video data, for instance for de-identification of non-patients in an uncontrolled clinical environment.

### BACKGROUND OF THE INVENTION

Health data are very sensitive and must be rigorously protected. This applies to all identifiable information such as oral communications, paper copies, video and audio recordings, digital images, and other electronic formats. While protecting the health data of patients has been well done by hospitals, the privacy of clinical staff is not thoroughly protected yet. In this context, the increasing usage of cameras, for example for contactless patient monitoring, poses a risk to the privacy of clinical staff, which may object to the use of cameras unless they are anonymized so as to not be recognizable in any video.

Protecting privacy in (RGB) videos basically requires masking all information that can identify a person, such as face and/or body regions. In the hospital context, there are some specific challenges to be addressed including:
- No frame maybe missed as even on a single frame privacy remains visible.
- There are lying people (mostly patients) and standing people (mostly staff).
- The number of people in a hospital room is not a priori known.
- The background can be very cluttered and visually noisy.

### SUMMARY OF THE INVENTION

It is an object of the present invention to provide a device, system and method for reliably tracking and/or de-identification of faces in video data.

In a first aspect of the present invention a device for tracking and/or de-identification of faces in video data is presented, said device comprising processing circuitry configured to:
- detect one or more faces in a current image frame of video data of a scene,
- detect one or more body parts in said current image frame,
- track one or more faces detected in one or more earlier image frames of the video data in the current image frame by use of one or more face trackers,
- check the overlap between faces and body parts detected in the current image frame and merge overlapping faces and body parts into merged face-body objects,
- check the overlap between merged face-body objects and tracked faces to distinguish in the current image frame existing faces that have been tracked before and new faces that have not been tracked before, and
- update face trackers used in the detection of the one or more faces based on the position of existing faces and creating new face trackers based on the position of new faces.

In a further aspect of the present invention a system for tracking and/or de-identification of faces in video data is presented, said system comprising:
- an imaging unit configured to acquire video data of a scene, and
- a device as disclosed herein for tracking and/or de-identification of faces in the acquired video data.

In yet further aspects of the present invention, there are provided a corresponding method, a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed method, system, computer program and medium have similar and/or identical preferred embodiments as the claimed system, in particular as defined in the dependent claims and as disclosed herein.

The present invention is based on the idea to provide a full computer vision based solution that is applicable to any video input. To guarantee near-zero false negatives, there are three parallel yet associated processing streams: Face detection to detect faces in each frame, body detection to compensate if the face is not detectable but the body is, and temporal tracking to compensate face and body detection for detection failures. The three streams are complementary and combined to guarantee reliable tracking and/or de-identification of all faces, as provided in an embodiment. This redundancy design particularly guarantees the near-zero false negatives of the proposed solution.

A body part shall in this context be understood as one or more parts (e.g. head, shoulder, arms, etc.) of the body of a person or a group of body parts (e.g. the torso or upper part of the body) or the complete body.

The proposed solution can be provided as software for different use cases, e.g. for use as a standalone software by hospital staff and for use as a component for cloud-based services.

According to an embodiment the processing circuitry is further configured to determine which of the existing and new faces shall be de-identified and to de-identify the existing and new faces that shall be de-identified based on said determination. For instance, the persons or the type of person may be determined to decide if the face of the person shall be de-identified or not. For instance, it can be determined if a person is a staff person of a hospital who shall not be recognizable in video data.

Accordingly, it is proposed in an embodiment that the processing circuitry is further configured to determine the identity or group membership of persons corresponding to the existing and new faces and to determine which of the existing and new faces shall be de-identified based on the identity or group membership of persons corresponding to the existing and new faces. The group membership may e.g. be that a person belongs to the group of staff of a hospital or belongs to the group of patient, if patients shall be de-identified, or belongs to the group of employees in a company if only non-employees shall be identified.

In an embodiment the processing circuitry may further be configured to determine the identity or group membership of persons based on at least one of the detected faces, the detected body parts, tracked faces and/or context information identifying features of faces, body parts and/or persons. Context information may generally be characteristic information, like size, color, shape, proportion, or any other characteristics that enables or supports distinguishing a person from another person. With this embodiment the reliability of identification can be further improved.

In a particular implementation, preferably for use in a hospital, the processing circuitry is further configured to determine if a person is a patient or non-patient and to de-identify faces and/or body parts corresponding to non-patients. This may guarantee the desired anonymity of non-patients.

There are various technologies for de-identifying parts of an image. In a preferred embodiment the processing circuitry may be configured to de-identify faces and/or body parts by blurring, masking and/or ghosting. Other technologies may be applied as well.

In a practical embodiment that allows a simple and fast processing but maintains the desired reliability, the processing circuitry is further configured to check the overlap between faces and body parts detected in the current image frame and merge overlapping faces and body parts into merged face-body objects by arranging a bounding box around each detected face and each detected body part, checking the overlap between bounding boxes, and merging faces and body parts whose bounding boxes overlap or merging their bounding boxes.

In a further embodiment that allows a simple and fast processing but maintains the desired reliability, the processing circuitry is further configured to check the overlap between merged face-body objects and tracked faces by arranging a bounding box around each detected face and each detected face-body object and checking the overlap between bounding boxes.

Hereby, the processing circuitry may further be configured to distinguish in the current image frame existing faces that have been tracked before and new faces that have not been tracked before by identifying a detected face as an existing face if an overlap has been detected between a bounding box around a detected face and a bounding box around a detected face-body object and identifying a detected face as a new face if no overlap has been detected between a bounding box around a detected face and a bounding box around a detected face-body object.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of a system and a device according to the present invention,
Fig. 2 shows a flow chart of a first embodiment of a method according to the present invention,
Fig. 3 shows a flow chart of a second embodiment of a method according to the present invention,
Fig. 4 shows exemplary images with de-identified faces and body parts, and
Fig. 5 shows a flow chart of a third embodiment of a method according to the present invention.

### DETAILED DESCRIPTION OF EMBODIMENTS

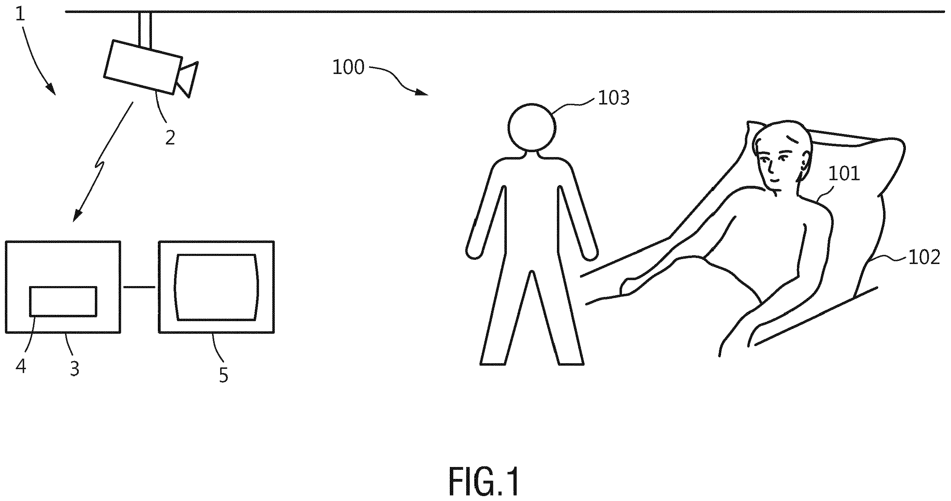

Fig. 1 shows a schematic diagram of a system 1 and a device 3 according to the present invention. The system 1 is configured for tracking and/or de-identification of faces in video data and comprises an imaging unit 2 configured to acquire video data of a scene 100, and a device 3 for tracking and/or de-identification of faces in the acquired video data.

The scene 100 may e.g. be a patient room in a hospital, in which a patient 101 is lying in a bed 102. Other persons 103, like a doctor, nurse, visitor or family companion, may be present in the scene 100 from time to time, whose identity shall be protected and shall not be visible in the video data acquired by the imaging unit 2. In other applications it may be desired to protect the identity of the patient 101, e.g. if the patient prefers not being monitored by care devices like camera-based vital sign measurements.

The imaging unit 2 may e.g. be a video camera or a still image camera in a patient room or a waiting room or a floor in a hospital, where different persons (e.g. staff, doctors, patients, visitors, etc.) are frequently present. The device 3 may be computer or processor or any other hard- and/or software, e.g. a central workstation, i.e. comprises circuitry 4 to carry out the steps of the disclosed method. The device 3 obtains (e.g. receives or retrieves) the image data from the imaging unit 2 (through a wired (e.g. IP network, LAN or fixed cable) or wireless (e.g. WLAN, Bluetooth, etc.) connection. The device 3 then processes the image data, e.g. to monitor a patient, and/or displays the image data on a monitor 5 for visual inspection, e.g. by a monitoring person. For instance, the image data acquired by the imaging unit 2 may be used for fall detection (i.e. to detect if the patient is lying in the bed or fallen off the bed) or for vital sign measurements (e.g. to detect the patient's respiration rate or heart rate using the principle of remote photoplethysmography) or for simple visual surveillance.

The disclosed solution may be provided as software for different use cases, e.g. used as a standalone software by hospital staff or used as a component for cloud-based services. It may particularly be implemented as a full computer vision based solution that is applicable to any video input. To guarantee near-zero false negatives, there are three parallel yet associated processing streams:
- Face detection to detect faces in subsequent image frames, preferably in each image frame;
- Body detection to compensate if the face is not detectable but the body is; and
- Temporal tracking to compensate face and body detection for detection failures.

The three streams are complementary and combined to guarantee masking of all faces. This redundancy design guarantees the near-zero false negatives of the proposed method.

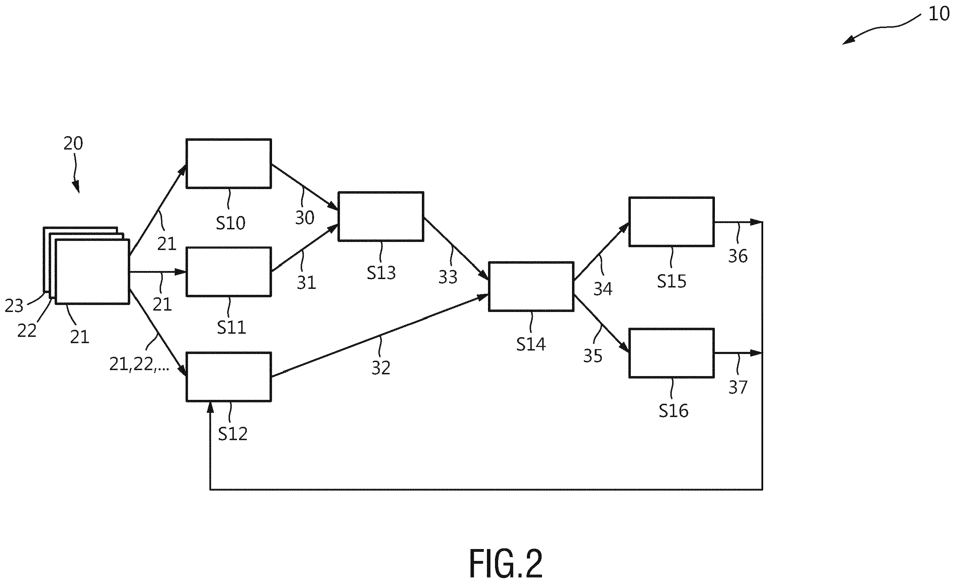

Fig. 2 shows a flow chart of a first embodiment of a method 10 according to the present invention.

In the first processing stream one or more faces 30 are detected (step S10) in a current image frame 21 (e.g. image frame acquired at time t) of video data 20 of a scene, the video data 20 comprising a plurality of image frames 21, 22, 23, ... acquired over time (e.g. consecutively at regular intervals or continuously at times t, t-1, t-2, ...).

In the second processing stream (performed in parallel to the first processing stream) one or more body parts 31 are detected (step S11) in said current image frame 21.

In the third processing stream (performed in parallel to the first and second processing streams) one or more faces 32 detected in one or more earlier image frames 22 (acquired at time t-1), 23 (acquired a time t-2), etc. of the video data 20 are tracked (step S12) in the current image frame 21 by use of one or more face trackers.

In a fourth step S13 the first and second processing streams are merged by checking the overlap between faces 30 and body parts 31 detected in the current image frame 21 and merging overlapping faces and body parts into merged face-body objects 33.

In a fifth step S14 the overlap between merged face-body objects 33 and tracked faces 32 is detected to distinguish in the current image frame 21 existing faces 34 that have been tracked before and new faces 35 that have not been tracked before.

Finally, in step S15, face trackers 36 used in the detection of the one or more faces (step S12) based on the position of existing faces 34 are updated and in step S16, new face trackers 37 are created based on the position of new faces 35. The updated face trackers 36 and the new face trackers 37 are then used as face trackers in the next execution of step S12 to track the position of the then existing in the next image frame.

Hence, according to this embodiment, at an arbitrary time t, faces and bodies (preferably all faces and bodies) in an image frame are detected in parallel, e.g. through loading pre-trained deep learning models or any other appropriate object detection tools. In parallel, the faces that are known at time t-1 are tracked. The overlap between the detected faces and bodies is checked and the overlapped ones are merged. Similarly, the overlap between the tracked and the merged detected faces is checked to identify "existing" faces, for which their corresponding trackers are updated with the overlapped position. There are cases that one face is overlapped with multiple bodies or multiple tracked faces are connected to one detected face. To handle this, a Hungarian algorithm may be applied to optimize the overlapping-based association for better one-to-one assignments. For the ones that are detected but not tracked, i.e. "new" faces, new trackers are created to start tracking face positions at the next image frame.

In practice, there can be many new trackers created over time due to the known issues of tracker drifting or inaccurate localization of objects. An elapsed rate maybe defined for each tracker when the tracker was created. Within a certain threshold, if the tracker has never been assigned to any new detection, it is likely that the tracker is redundant, the tracker will thus be deleted when its elapsed rate reaches the given threshold. Whenever the tracker was coupled with a detection result, its elapsed time will be reset to zero. The elapse threshold could be set at around 10 or bigger to potentially avoid false negatives.

This method can be used in various applications for reliably tracking one or more persons in a scene, in particular in scenes where people come and go so that it is necessary to distinguish between already recognized persons ("existing faces") and newly appearing persons ("new faces"). Such applications include people counting, workflow tracking and optimization, patient safety alarming in clinical or other settings.

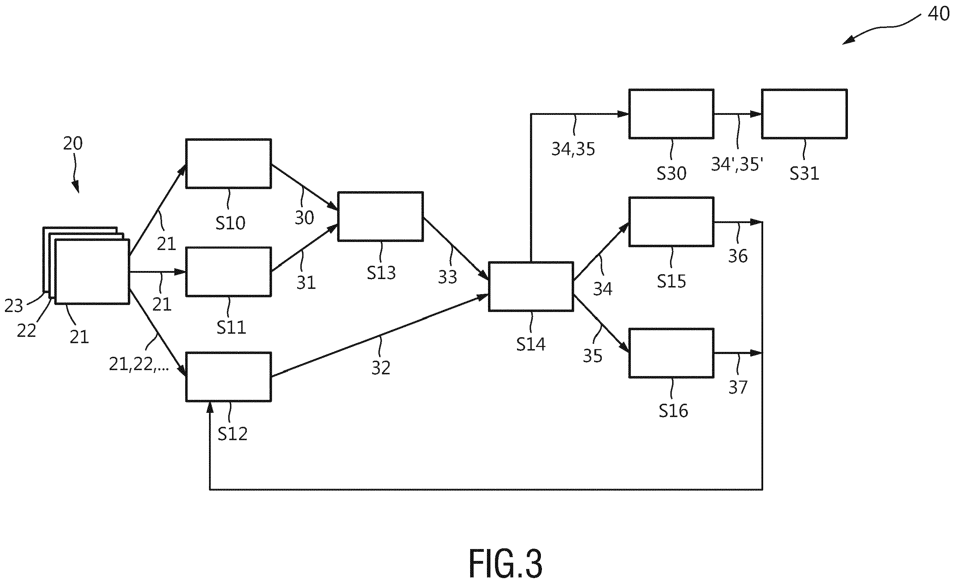

Fig. 3 shows a flow chart of a second embodiment of a method 40 according to the present invention. The method 40 is similar to the method 10 shown in Fig. 2, but comprises additional steps. In particular, in step S30, following step S14, it is determined which of the existing faces 34 and new faces 35 shall be de-identified. Subsequently, in step S31, the existing faces 34' and new faces 35' that shall be de-identified are de-identified based on said determination, e.g. before the image frame 21 is displayed on a monitor. This determination and de-identification can be done continuously with the complete video data to reliably ensure that persons that shall not be recognizable from the displayed and/or further processed video data. The proposed solution of this embodiment can thus securely mask each frame of an input video sequence.

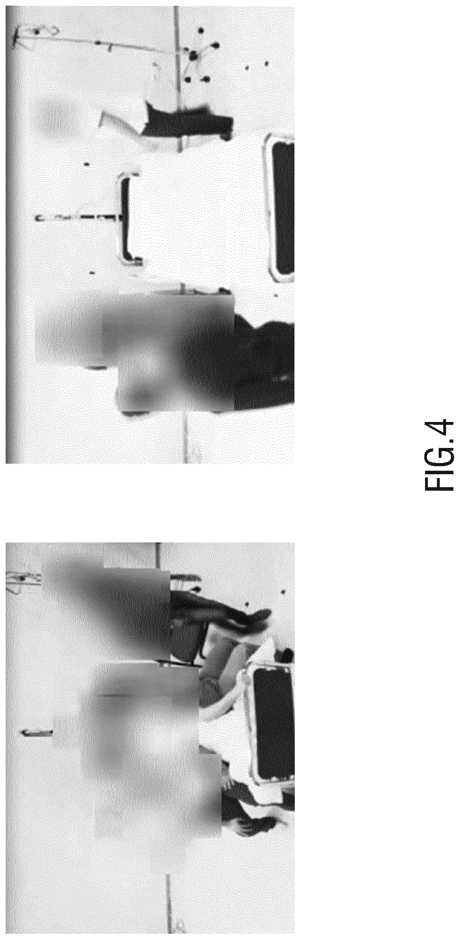

Fig. 4 shows exemplary images with de-identified faces and body parts. In this example a bounding box is (virtually) drawn around the face and some part of the body and the area inside the bounding box is then blurred using any conventional way for blurring image data. Other ways for de-identifying faces and/or body parts can be used as well, e.g. masking (e.g. drawing a black box on top of the area to be de-identified) and/or ghosting.

For implementing step S13, i.e. for checking the overlap between faces and body parts detected in the current image frame and merging overlapping faces and body parts into merged face-body objects, a bounding box may be arranged around each detected face and each detected body part. The overlap between bounding boxes may then be checked so that faces and body parts whose bounding boxes overlap can be merged to a merged face-body object.

For implementing part of step S14, i.e. for checking the overlap between merged face-body objects and tracked faces, a bounding box may be used as well that is arranged around each detected face and each detected face-body object. The overlap between those bounding boxes can then be checked.

For implementing the other part of step S14, i.e. for distinguishing in the current image frame existing faces that have been tracked before and new faces that have not been tracked before, a detected face maybe identified as an existing face if an overlap has been detected between a bounding box around a detected face and a bounding box around a detected face-body object, and a detected face may be identified as a new face if no overlap has been detected between a bounding box around a detected face and a bounding box around a detected face-body object.

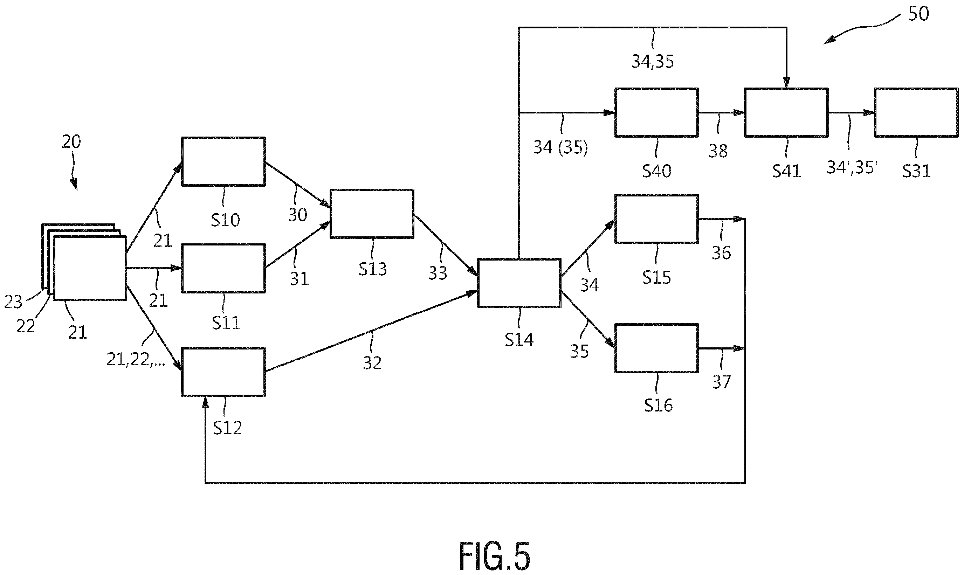

Fig. 5 shows a flow chart of a third embodiment of a method 50 according to the present invention. The method 50 is similar to the method 40 shown in Fig. 3, but comprises additional steps. In particular, the identity or group membership of persons corresponding to the existing and new faces may be identified in step S40 to obtain corresponding identity or group membership information 38. For instance, the identity of persons may be individually identified. In addition or alternatively, the group membership (e.g. if the person is a patient (i.e. belongs to the group of patients) or is a staff person of the hospital or is a visitor) may be identified. This is particularly done for the new faces 35 since this information may already be available (from a prior iteration) for existing faces 34, but may additionally also be done for existing faces 35.

Afterwards, it is determined in step S41 (which basically replaces step S30 and is slightly modified compared to step S30), which of the existing faces 34 and new faces 35 shall be de-identified based on the identity or group membership information 38 of persons corresponding to the existing and new faces. Subsequently, in step S31, the existing faces 34' and new faces 35' that shall be de-identified are de-identified based on said determination, e.g. before the image frame 21 is display on a monitor.

The identity and/or group membership of persons may hereby be determined based on at least one of the detected faces, the detected body parts, tracked faces and/or context information identifying features of faces, body parts and/or persons. Context information may e.g. be the time when a person is identified (e.g., at night the person will not be a visitor), the clothes worn by the person (a doctor or staff may wear typical clothes), the posture of the person (a patient is often lying in a bed, whereas other persons are generally sitting or standing), the gait of the person, or even the voice of the person if there is any.

In a particular application, e.g. for use in a hospital or rest home, it may be determined if a person is a patient or non-patient and faces and/or body parts corresponding to non-patients may then be de-identified to guarantee the anonymity / privacy of non-patients (in particular staff of the hospital and visitors) in the (displayed) video data.

The present invention thus provides a redundant combination of face detection, body detection and tracking to guarantee near-zero false negatives, i.e. the lowest false negatives are desired to be achieved while relatively losing the requirements on accuracy. Further, a highly parallel processing is used to provide redundancy and real-time speed of processing.

The proposed processing is robust even in case of large face angles, long distances, partial occlusions, daily activity, moderate darkness and over lighting, and cluttered background.

The proposed solution can be used to protect privacies at home and even in certain public scenarios. It ensures a high reliability regarding the tracking and/or de-identification of faces in video data in various applications and scenarios.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Device for tracking and/or de-identification of faces in video data, said device (3) comprising processing circuitry (4) configured to:
- detect one or more faces in a current image frame of video data of a scene,
- detect one or more body parts in said current image frame,
- track one or more faces detected in one or more earlier image frames of the video data in the current image frame by use of one or more face trackers,
- check the overlap between faces and body parts detected in the current image frame and merge overlapping faces and body parts into merged face-body objects,
- check the overlap between merged face-body objects and tracked faces to distinguish in the current image frame existing faces that have been tracked before and new faces that have not been tracked before, and
- update face trackers used in the detection of the one or more faces based on the position of existing faces and creating new face trackers based on the position of new faces.

2. Device as claimed in claim 1,
wherein the processing circuitry (4) is further configured to
- determine which of the existing and new faces shall be de-identified and
- de-identify the existing and new faces that shall be de-identified based on said determination.

3. Device as claimed in claim 2,
wherein the processing circuitry (4) is further configured to
- determine the identity or group membership of persons corresponding to the existing and new faces and
- determine which of the existing and new faces shall be de-identified based on the identity or group membership of persons corresponding to the existing and new faces.

4. Device as claimed in claim 3,
wherein the processing circuitry is further configured to determine the identity or group membership of persons based on at least one of the detected faces, the detected body parts, tracked faces and/or context information identifying features of faces, body parts and/or persons.

5. Device as claimed in claim 3 or 4,
wherein the processing circuitry (4) is further configured to
- determine if a person is a patient or non-patient and
- de-identify faces and/or body parts corresponding to non-patients.

6. Device as claimed in any one of claims 2 to 5,
wherein the processing circuitry (4) is further configured to de-identify faces and/or body parts by blurring, masking and/or ghosting.

7. Device as claimed in any one of the preceding claims,
wherein the processing circuitry (4) is further configured to check the overlap between faces and body parts detected in the current image frame and merge overlapping faces and body parts into merged face-body objects by
- arranging a bounding box around each detected face and each detected body part,
- checking the overlap between bounding boxes, and
- merging faces and body parts whose bounding boxes overlap or merging their bounding boxes.

8. Device as claimed in any one of the preceding claims,
wherein the processing circuitry (4) is further configured to check the overlap between merged face-body objects and tracked faces by
- arranging a bounding box around each detected face and each detected face-body object, and
- checking the overlap between bounding boxes.

9. Device as claimed in claim 8,
wherein the processing circuitry (4) is further configured to distinguish in the current image frame existing faces that have been tracked before and new faces that have not been tracked before by
- identifying a detected face as an existing face if an overlap has been detected between a bounding box around a detected face and a bounding box around a detected face-body object and
- identifying a detected face as a new face if no overlap has been detected between a bounding box around a detected face and a bounding box around a detected face-body object.

10. System for tracking and/or de-identification of faces in video data, said system comprising:
- an imaging unit (2) configured to acquire video data of a scene (100), and
- a device (3) as claimed in any one of the preceding claims for tracking and/or de-identification of faces in the acquired video data.

11. Method of tracking and/or de-identification of faces in video data comprising:
- detecting one or more faces in a current image frame of video data of a scene,
- detecting one or more body parts in said current image frame,
- tracking one or more faces detected in one or more earlier image frames of the video data in the current image frame by use of one or more face trackers,
- checking the overlap between faces and body parts detected in the current image frame and merging overlapping faces and body parts into merged face-body objects,
- checking the overlap between merged face-body objects and tracked faces to distinguish in the current image frame existing faces that have been tracked before and new faces that have not been tracked before, and
- updating face trackers used in the detection of the one or more faces based on the position of existing faces and creating new face trackers based on the position of new faces.

12. Computer program comprising program code means for causing a computer to carry out the steps of the method as claimed in claim 11 when said computer program is carried out on the computer.
